# FASCICULE DE BREVET EUROPEEN

(11) **EP 0 479 634 B1**
(45) Date de publication et mention de la délivrance du brevet: **30.11.1994**
(21) Numéro de dépôt: 91402443.5
(22) Date de dépôt: 13.09.1991
(51) Int. Cl.: B60Q 1/14

(54) **Dispositif projecteur pour véhicule automobile**
Scheinwerfereinrichtung für Fahrzeuge
Headlamp device for vehicle

(30) Priorité: 02.10.1990 FR 9012124
(43) Date de publication de la demande: 08.04.1992
(73) Titulaire: AUTOMOBILES PEUGEOT, 75116 Paris (FR); AUTOMOBILES CITROEN, 92200 Neuilly-sur-Seine (FR)
(72) Inventeur: Vassal, Gérard, F-91410 Dourdan (FR)
(74) Mandataire: Berger, Helmut

(56) Documents cités:
- GB-A- 1 142 910
- REVUE AUTOMOBILE vol. 51, no. 82, 18 Décembre 1987, BERNE page 17; BEHRENDT: "LES INFRAROUGES AU SERVICE DE LA SECURITE"

## Description

La présente invention concerne un dispositif projecteur pour véhicule automobile.

On connaît de tels dispositifs projecteurs, du type comprenant des feux de croisement, des feux longue portée et un moyen de commutation à deux positions d'allumage respectivement des feux de croisement et des feux longue portée. Lorsque le véhicule croise par temps obscur ou de nuit un autre véhicule venant en sens inverse, le conducteur du premier véhicule commande le basculement du moyen de commutation de la position d'allumage des feux longue portée à la position d'allumage des feux de croisement afin de ne pas éblouir le conducteur du second véhicule. Le conducteur du premier véhicule a alors une profondeur de champ de vision brusquement limitée ou réduite, de l'ordre de 20 à 25 mètres, parfois incompatible avec la vitesse à laquelle il roule.

Le document GB-A-1 142 910 décrit un dispositif comprenant les caractéristiques du préambule de la revendication 1. Cependant, ce dispositif connu n'est adapté que pour la vision par temps de brouillard et ne permet pas de résoudre le problème ci-dessus exposé de l'invention.

La présente invention a pour but d'éliminer l'inconvénient ci-dessus des dispositifs projecteurs connus en proposant un dispositif projecteur permettant de conserver une profondeur de champ de vision équivalente à celle qu'a normalement le conducteur avec l'éclairage de longue portée (de l'ordre de 100 à 200 mètres au moins) et donc d'améliorer considérablement la visibilité par temps obscur et de nuit du conducteur.

Pour cela, le dispositif projecteur pour véhicule automobile de l'invention, du type comprenant des feux de croisement, des feux longue portée, un moyen de commutation à deux positions d'allumage respectivement des feux de croisement et des feux longue portée, et un ensemble moyen capteur sensible à un rayonnement invisible, de préférence infra-rouge, et écran de visualisation permettant de donner au conducteur une image infra-rouge de la route éclairée sur laquelle se déplace le véhicule, est caractérisé en ce qu'il comprend des moyens d'éclairage longue portée à rayonnement invisible, de préférence infra-rouge, allumés lorsque le moyen de commutation est en position d'allumage des feux de croisement de façon que l'ensemble moyen capteur et écran de visualisation donne au conducteur une image infra-rouge de la route lors d'un croisement avec un autre véhicule.

De préférence, les moyens d'éclairage longue portée précités comprennent les feux longue portée précités allumés lorsque le moyen de commutation est en position d'allumage des feux de croisement et des filtres opaques au rayonnement visible, transparents au rayonnement invisible et pouvant être déplacés par des moyens de commande lorsque le moyen de commutation est en position d'allumage des feux de croisement de façon à s'interposer sur le trajet de la lumière projetée par les feux longue portée.

Avantageusement, les filtres ont une transmission de rayonnement voisine de zéro pour un rayonnement inférieur à environ 800 nanomètres de longueur d'onde et voisine de 100% pour un rayonnement supérieur à 800 nanomètres.

Selon une caractéristique de l'invention, l'ensemble moyen capteur-écran de visualisation est installé dans l'habitacle du véhicule et le moyen capteur est une caméra vidéo, de préférence du type à détecteurs CCD, reliée à l'écran de visualisation.

De préférence, la caméra vidéo précitée a une sensibilité voisine de 50% pour la longueur d'onde de 800 nanomètres précitée.

Selon un mode de réalisation, les moyens de commande du déplacement de chaque filtre associé à un feu longue portée comprennent un moteur électrique commandant par l'intermédiaire d'une tringlerie le pivotement du filtre entre une position inactive hors du trajet de lumière du feu longue portée et une position active interposée dans ledit trajet selon respectivement la position d'allumage des feux longue portée et la position d'allumage des feux de croisement du moyen de commutation et un circuit inverseur ayant une entrée susceptible d'être reliée par le moyen de commutation à la tension d'allumage des feux de croisement, une sortie d'alimentation du feu longue portée lorsque les feux de croisement sont allumés et une autre sortie fournissant une tension d'alimentation du moteur électrique destinée à faire pivoter le filtre en position inactive lorsque aucune tension n'est appliquée à l'entrée du circuit inverseur et une tension inverse d'alimentation du moteur électrique lorsque la tension d'allumage des feux de croisement est appliquée par le moyen de commutation à l'entrée du circuit inverseur pour faire pivoter le filtre en position active.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels:
La figure 1 représente schématiquement en vue de dessus l'avant d'un véhicule automobile équipé du dispositif projecteur conforme à l'invention.
La figure 2 représente schématiquement une vue en coupe suivant la ligne II-II de la figure 1.
La figure 3 représente un mode de réalisation du circuit électrique d'alimentation des feux de croisement et longue portée conforme à l'invention.
La figure 4 représente une courbe caractéristique de sensibilité d'une caméra vidéo en fonction de la longueur d'onde.
La figure 5 est une courbe caractéristique de transmission des filtres utilisés dans le dispositif projecteur de l'invention en fonction de la longueur d'onde.
Les figures 6A et 6B représentent deux véhicules se croisant de nuit respectivement dans le cas d'un véhicule non équipé du dispositif projecteur de l'invention et d'un véhicule équipé d'un tel dispositif.

En se référant aux figures, la référence 1 désigne la partie avant d'un véhicule automobile comportant, de façon classique, deux feux de croisement 2, deux feux de route longue portée 3 juxtaposés aux feux de croisement 2 et un commutateur 4 pouvant être manoeuvré par le conducteur pour occuper une position d'allumage des feux de croisement 2 ou une position d'allumage des feux longue portée 3. Le commutateur 4 est constitué par exemple par un contact mobile actionné par une tige de commande (non représentée) de façon à relier le pôle positif d'une tension continue d'alimentation fournie par exemple par la batterie du véhicule soit à une borne fixe de contact CR reliée électriquement à la lampe L1, par exemple du type à incandescence, halogène ou autre, logée dans le réflecteur parabolique 5 de chaque feu de croisement 2, soit à une borne de contact fixe PH reliée électriquement à la lampe L2, également du type à incandescence, halogène ou autre, logée dans le réflecteur parabolique 6 de chaque feu longue portée 3.

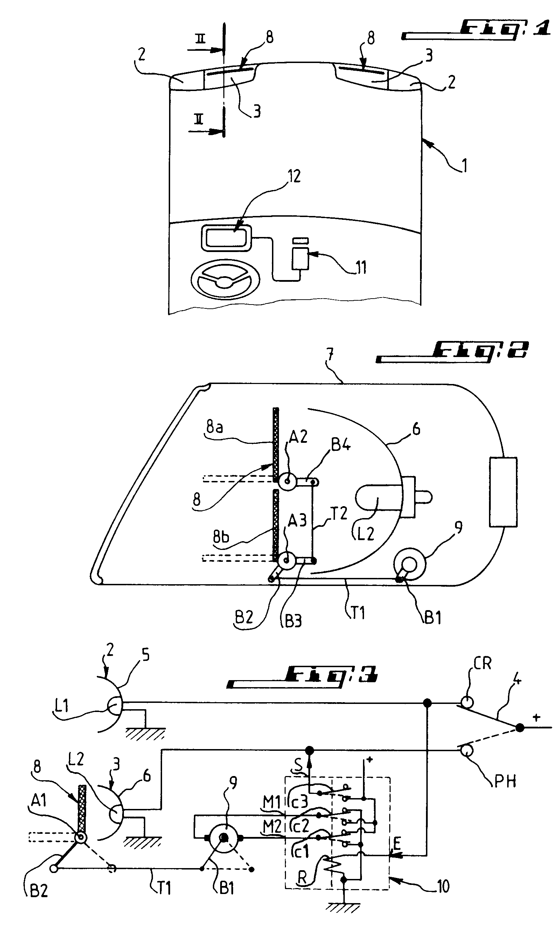

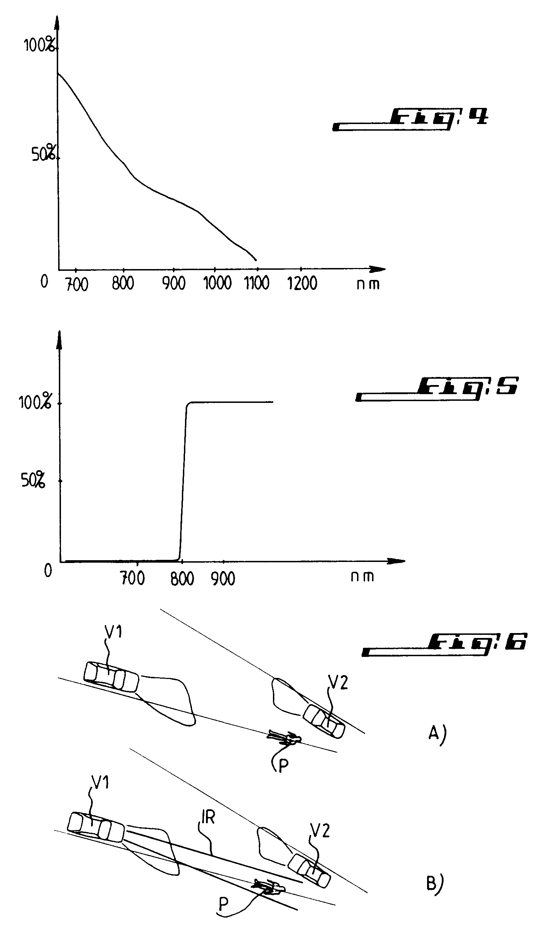

Selon l'invention, on prévoit dans le boîtier 7 de chaque feu longue portée 3 un moyen formant filtre optique 8 opaque au rayonnement visible et transparent au rayonnement invisible, dans le cas présent infra-rouge, et pouvant pivoter entre une position inactive approximativement horizontale, représentée en pointillés, hors du trajet du faisceau lumineux provenant de la lampe L2 du feu longue portée 3 et une position active approximativement verticale, représentée en trait fort, de façon à être interposé sur le trajet du faisceau lumineux de la lampe L2 et ne laisser passer ainsi que le rayonnement infra-rouge du faisceau. Chaque moyen de filtrage 8 peut être constitué par une simple plaque ou volet, de forme rectangulaire ou circulaire, pouvant pivoter autour d'un axe fixe de pivotement A1 solidaire du boîtier 7 comme représenté schématiquement en figure 3 ou par deux plaques séparées ou volets 8a, 8b, également de forme rectangulaire ou circulaire, pouvant pivoter respectivement autour de deux axes fixes de pivotement A2, A3 solidaires du boîtier 7 comme représenté en figure 2. Chaque moyen de filtrage 8 est situé, en position active de filtrage, pratiquement juste devant le réflecteur 6 de chaque feu longue portée 3. L'utilisation de deux volets 8a, 8b comme moyen de filtrage permet de limiter la profondeur du boîtier 7 de projecteur. Le pivotement de chaque moyen de filtrage 8 est commandé par un actionneur électrique tel qu'un moteur électrique 9, logé dans le boîtier 7 et dont l'arbre d'entraînement est relié au moyen de filtrage 8 par l'intermédiaire d'une tringlerie. Dans le cas d'une plaque de filtrage unique, la tringlerie est constituée par un bras radial de pivotement B1 solidaire de l'arbre d'entraînement du moteur 9, une tringle de renvoi T1 reliée de façon articulée à l'une de ses extrémités au bras B1 et à son autre extrémité à un bras radial de pivotement B2 solidaire de la plaque 8 à son extrémité inférieure. Dans le cas du moyen de filtrage 8 à deux plaques 8a, 8b, on retrouve également le bras B1, la tringle T1 et le bras B2 formant la tringlerie précédemment décrite avec de plus le bras B2 solidaire de l'extrémité inférieure de la plaque 8b et une tringle supplémentaire T2 reliée de façon articulée à ses deux extrémités respectivement à deux bras de pivotement parallèles B3 et B4 solidarisés respectivement aux extrémités inférieures des plaques 8b et 8a avec le bras B3 formant un angle obtus avec le bras B2.

Chaque moteur 9 est actionné par un circuit inverseur 10 qui peut être logé dans le boîtier 7 ou disposé à l'extérieur de celui-ci et alimenté par la batterie du véhicule. Le circuit 10 a une entrée E reliée électriquement à la borne CR, une sortie S reliée électriquement à la borne PH et deux bornes de sortie M1, M2 fournissant la tension électrique d'alimentation du moteur 9. Lorsqu'aucune tension n'est appliquée à l'entrée E du circuit 10, c'est-à-dire lorsque le commutateur 4 est en position d'alimentation des lampes L2 des feux longue portée 3 représentée en pointillés, la tension produite par le circuit 10 aux bornes M1, M2 a un sens tel que le moteur 9 entraîne les bras B1, B2 dans le sens contraire des aiguilles d'une montre de façon à faire pivoter le moyen de filtrage 8 en position inactive ou escamotée. Lorsque le commutateur 4 contacte la borne CR pour alimenter les lampes L1 des feux de croisement 2, la tension d'alimentation de chaque lampe L1 est appliquée à la borne E du circuit 10, qui fournit aux bornes M1, M2 une tension inverse de celle produite précédemment de façon que le moteur 9 entraîne les bras B1, B2 dans le sens des aiguilles d'une montre afin de faire pivoter le moyen de filtrage 8 en position active devant le réflecteur parabolique correspondant 6 des feux longue portée 3. Simultanément, le circuit 10 produit à la sortie S la tension d'alimentation des lampes L2 des feux longue portée 3. Un exemple de réalisation du circuit 10 est représenté en figure 3 et comprend un relais R, relié entre la masse et l'entrée E, et pouvant actionner trois contacts relais c1, c2 et c3 mobiles simultanément entre la position de repos représentée en traits forts où le contact c1 met la borne M2 à un potentiel positif, le contact c2 met la borne M1 au potentiel de masse, le contact c3 met la sortie S en l'air (0V) et une position de service où les contacts c1 et c2 amènent les bornes M2 et M1 respectivement au potentiel de masse et au potentiel positif et le contact c3 amène la sortie S au potentiel positif. Ainsi, lorsque le commutateur 4 contacte la borne PH, le circuit 10 est en position de repos. Lorsque le commutateur 4 bascule pour contacter la borne CR, les contacts c1 à c3 sont à la position représentée en pointillés, les polarités aux bornes M1 et M2 s'inversent et la sortie S produit la tension d'alimentation des lampes L2. Bien entendu, d'autres modes de réalisation du circuit inverseur 10, par exemple à base de circuits logiques, sont possibles sans sortir du cadre de la présente invention.

Le dispositif projecteur comprend de plus un ensemble logé dans l'habitacle du véhicule et comprenant une caméra vidéo 11, de préférence du type à détecteurs CCD (Dispositif à couplage de charge), sensibles au rayonnement infra-rouge, permettant de capter une image de l'environnement du conducteur notamment de la route éclairée sur laquelle se déplace le véhicule, et un écran 12, par exemple du type à cristaux liquides, placé de façon appropriée devant le conducteur de façon à lui visualiser une image infra-rouge de la route.

Le fonctionnement du dispositif projecteur résulte déjà de la description qui en a été faite ci-dessus et va être maintenant expliqué brièvement.

Lorsque le commutateur 4 contacte la borne PH, les lampes L2 des feux longue portée 3 sont allumées et chaque moyen de filtrage 8 est en position escamotée de façon que le conducteur ait une profondeur de champ de vision habituelle avec cet éclairage de longue portée, généralement de 100 à 200 mètres au moins. Lorsque le conducteur amène le commutateur 4 à contacter la borne CR, les lampes L1 des feux de croisement 2 sont allumées et, simultanément, le circuit 10 commande l'allumage des lampes L2 des feux longue portée 3 et le pivotement automatique de chaque moyen de filtrage 8 en position active de façon à ne laisser passer que la lumière des lampes L2 ayant une longueur d'onde correspondant à l'infra-rouge. La lumière infra-rouge passant les moyens de filtrage 8 étant invisible à l'oeil humain ne peut donc pas éblouir le conducteur du véhicule d'en face. La caméro vidéo 11 sensible à cette lumière infra-rouge permet de capter une image de la route éclairée par la lumière infra-rouge et de la transmettre au conducteur par l'intermédiaire de l'écran 12. Lorsque le conducteur commande donc l'éclairage de son véhicule de la position "feux longue portée" à la position "feu de croisement", il conserve, grâce au dispositif de l'invention, une profondeur de champ de vision au moins équivalente à celle donnée par les feux longue portée en position feux longue portée du commutateur 4.

La figure 6A montre le croisement de deux véhicules V1 et V2 ne comportant pas le dispositif projecteur de l'invention. Lorsque le véhicule V1 éclaire la route par ses feux de croisement, le piéton P situé à proximité de la route à l'avant du véhicule V1 est quasiment invisible. Par contre, lorsque le véhicule

V1 est équipé du dispositif conforme à l'invention, le rayonnement infra-rouge IR émis par ce véhicule lorsque ses feux de croisement sont allumés éclaire le piéton P qui apparaît alors nettement sur l'écran de visualisation 12.

La figure 5 montre une courbe caractéristique préférentielle de transmission de rayonnement de chaque moyen de filtrage 8. Ainsi, chaque moyen 8 a une transmission de rayonnement voisine de zéro pour tout rayonnement d'une longueur d'onde inférieure à environ 800 nanomètres et une transmission voisine de 100% pour tout rayonnement supérieur à 800 nanomètres.

La figure 4 représente la courbe caractéristique de sensibilité de la caméra vidéo 11 en fonction de la longueur d'onde. Cette courbe caractéristique préférentielle montre que la caméra vidéo 11 a une sensibilité voisine de 50% pour la longueur d'onde de 800 nanomètres.

## Revendications

1. Dispositif projecteur pour véhicule automobile, du type comprenant des feux de croisement (2), des feux longue portée (3), un moyen de commutation (4) à deux positions d'allumage respectivement des feux de croisement (2) et des feux longue portée (3), et un ensemble moyen capteur (11) sensible à un rayonnement invisible, de préférence infrarouge, et écran de visualisation (12) permettant de donner au conducteur une image infra-rouge de la route éclairée sur laquelle se déplace le véhicule, caractérisé en ce qu'il comprend des moyens d'éclairage longue portée à rayonnement invisible (3, 8), de préférence infra-rouge, qui sont allumés lorsque le moyen de commutation (4) est en position d'allumage des feux de croisement (2) de façon que l'ensemble moyen capteur (11) et écran de visualisation (12) donne au conducteur une image infra-rouge de la route lors d'un croisement avec un autre véhicule.

2. Dispositif selon la revendication 1, caractérisé en ce que les moyens d'éclairage longue portée précités comprennent les feux longue portée (3) précités allumés lorsque le moyen de commutation (4) est en position d'allumage des feux de croisement (2) et des filtres (8) opaques au rayonnement visible et transparents au rayonnement infra-rouge et pouvant être déplacés par des moyens de commande lorsque le moyen de commutation (4) est en position d'allumage des feux de croisement (2) de façon à s'interposer sur le trajet de la lumière projetée par les feux longue portée (3).

3. Dispositif selon la revendication 1, caractérisé en ce que les filtres (8) précités ont une transmission de rayonnement voisine de zéro pour un rayonnement inférieur à environ 800 nanomètres de longueur d'onde et voisine de 100% pour un rayonnement supérieur à 800 nanomètres.

4. Dispositif selon la revendication 1, caractérisé en ce que l'ensemble précité moyen capteur (11)-écran de visualisation (12) est installé dans l'habitacle du véhicule et le moyen capteur (11) est une caméra vidéo, de préférence du type à détecteurs CCD, reliée à l'écran de visualisation (12).

5. Dispositif selon la revendication 4, caractérisé en ce que la caméra vidéo (11) a une sensibilité voisine de 50% pour la longueur d'onde de 800 nanomètres.

6. Dispositif selon l'une des revendications 2 à 5, caractérisé en ce que les moyens de commande du déplacement de chaque filtre (8) associé à un feu longue portée comprennent un moteur électrique (9) commandant, par l'intermédiaire d'une tringlerie, le pivotement du filtre (8) entre une position inactive hors du trajet de lumière du feu longue portée (3) et une position active interposée dans ledit trajet selon respectivement la position d'allumage des feux longue portée (3) et la position d'allumage des feux de croisement (2) du moyen de commutation (4) et un circuit inverseur (10) ayant une entrée (E) susceptible d'être reliée par le moyen de commutation (4) à la tension d'allumage des feux de croisement (2), une sortie (S) d'alimentation du feu longue portée (3) lorsque les feux de croisement (2) sont allumés et une autre sortie (M1, M2) fournissant une tension d'alimentation du moteur électrique (9) destinée à faire pivoter le filtre (8) en position inactive lorsqu'aucune tension n'est appliquée à l'entrée (E) du circuit inverseur (10) et une tension inverse d'alimentation du moteur électrique (9) lorsque la tension d'allumage des feux de croisement (2) est appliquée par le moyen de commutation (4) à l'entrée (E) du circuit inverseur (10) pour faire pivoter le filtre en position active.

## Claims

1. Headlight device for an automotive vehicle, of the type comprising dipped headlights (2), far-reaching headlights (3), a switching means (4) with two positions for lighting the dipped headlights (2) and the far-reaching headlights (3), respectively, and a set with a sensor means (11) sensitive to an invisible preferably infrared radiation and a visualizing display screen (12) permitting to give the driver an infrared image of the illuminated road on which the vehicle is moving, characterized in that it comprises far-reaching lighting means with an invisible preferably infrared radiation (3, 8) which are lit when the switching means (4) is in the position of lighting the dipped headlights (2) so that the set of sensors means (11) and visualizing display screen (12) gives the driver an infrared image of the road upon a crossing with another vehicle.

2. Device according to claim 1, characterized in that the aforesaid far-reaching lighting means comprise the aforesaid far-reaching headlights (3) lit when the switching means (4) is in the position for lighting the dipped headlights (2) and filters (8) opaque to the visible radiation and transparent to the infrared radiation and which may be displaced by control means when the switching means (4) is in the position of lighting the dipped headlights (2) so as to interpose on the path of the light projected by the far-reaching headlights (3).

3. Device according to claim 1, characterized in that the aforesaid filters have a radiation transmission near zero for a radiation lower than about 800 nanometers of wavelength and near 100% for a radiation higher than 800 nanometers.

4. Device according to claim 1, characterized in that the sensor means (11)-visualizing display screen (12) unit is installed within the passenger space of the vehicle and the sensor means (11) is a video camera, preferably of the type with CCD-detectors connected to the visualizing display screen (12).

5. Device according to claim 4, characterized in that the video camera (11) has a sensitivity near 50% for the wavelength of 800 nanometers.

6. Device according to one of claims 2 to 5, characterized in that the means for the control of the displacement of each filter (8) associated with a far-reaching headlight comprise an electric motor (9) operating through the medium of a linkage, the pivoting of the filter (8) between an inactive position outside of the path of travel of the light of the far-reaching headlight (3) and an active position interposed into the said path of travel according respectively to the lighting position of the far-reaching headlights (3) and the lighting position of the dipped headlights (2) of the switching means (4) and a reversing circuit (10) having one input (E) likely to be connected by the switching means (4) to the lighting voltage of the dipped headlights (2), an output (S) for feeding the far-reaching headlight (3) when the dipped headlights (2) are lit and another output (M1, M2) supplying a feed voltage to the electric motor (9) adapted to pivot the filter (8) into an inactive position when no voltage is applied at the input (E) of the reversing circuit (10) and a reverse feed voltage of the electric motor (9) when the lighting voltage of the dipped headlights (2) is applied by the switching means (4) to the input (E) of the reversing circuit (10) to pivot the filter into the active position.

## Patentansprüche

1. Scheinwerfervorrichtung für ein Kraftfahrzeug, derjenigen Gattung mit Abblendlichtern (2), Weitstrahlern (3), einem Umschaltungsmittel (4) mit zwei Stellungen zum Einschalten jeweils der Abblendlichter (2) und der Fernscheinwerfer (3) und einer einen für eine unsichtbare vorzugsweise infrarote Strahlung empfindlichen Aufnehmermittel (11) und einen Sichtbarmachungsanzeigeschirm (12) umfassenden Einheit, die dem Fahrer die Angabe eines infraroten Bildes der beleuchteten Strasse, auf welcher das Fahrzeug sich bewegt, zu ermöglichen, dadurch gekennzeichnet, dass sie weitreichende Beleuchtungsmittel mit unsichtbarer vorzugsweise infraroten Strahlung (3,8) aufweist, die eingeschaltet sind, wenn das Umschaltungsmittel (4) in der Stellung zum Einschalten der Abblendlichter (2) ist, damit die das Aufnehmermittel (11) und den Sichtbarmachungsanzeigeschirm (12) umfassende Einheit dem Fahrer ein infrarotes Bild der Strasse bei einer Kreuzung mit einem anderen Fahrzeug gibt.

2. Vorrichtung nach Anspruch 1, dadurch gekennzeichnet, dass die vorgenannten weitreichenden Beleuchtungsmittel die vorgenannten Fernscheinwerfer (3) umfasssen, die eingeschaltet sind, wenn das Umschaltungsmittel (4) in der Stellung zum Einschalten der Abblendlichter (2) ist sowie für die sichtbare Strahlung undurchlässige und für die infrarote Strahlulng durchlässige Filter (8), die durch Betätigungsmittel verschoben werden können, wenn das Umschaltungsmittel (4) in der Stellung zum Einschalten der Abblendlichter (2) ist, um sich in die Laufbahn des durch die Fernscheinwerfer (3) gestrahlten Lichtes zwischenzuschalten.

3. Vorrichtung nach Anspruch 1, dadurch gekennzeichnet, dass die vorgenannten Filter (8) eine Strahlungsübertragung haben, die nahe null für eine Strahlung mit einer Wellenlänge kleiner als ungefähr 800 Nanometer und nahe 100% für eine Strahlung mit einer Wellenlänge über 800 Nanometer ist.

4. Vorrichtung nach Anspruch 1, dadurch gekennzeichnet, dass die vorgenannte Gesamtheit aus Aufnehmermittel (11) und Sichtbarmachungsanzeigeschirm (12) in dem Passagierraum des Fahrzeugs angeordnet ist und das Aufnehmermittel (11) eine mit dem Sichtbarmachungsanzeigeschirm (12) verbundene Videokamera vorzugsweise der Bauart mit CCD-Detektoren ist.

5. Vorrichtung nach Anspruch 4, dadurch gekennzeichnet, dass die Videokamera (11) eine nahe 50% liegende Empfindlichkeit für die Wellenlänge von 800 Nanometern hat.

6. Vorrichtung nach einem der Ansprüche 2 bis 5, dadurch gekennzeichnet, dass die Mittel zur Steuerung der Bewegung des einem Fernscheinwerfer zugeordneten Filters (8) einen elektrischen Motor (9) aufweisen, der über ein Gestänge das Schwenken des Filters (8) zwischen einer unwirksamen Stellung ausserhalb der Lichtlaufbahn des Fernscheinwerfers (3) und einer in der besagten Laufbahn zwischengeschalteten wirksamen Stellung jeweils je nach der Stellung zum Einschalten der Fernscheinwerfer (3) und der Stellung zum Einschalten der Abblendlichter (2) des Umschaltungsmittels (4) sowie einen Umschaltungskreislauf (10) mit einem Eingang (E), der geeignet ist, durch das Umschaltungsmittel (4) an die Spannung zum Anmachen der Abblendlichter (2) angeschlossen zu werden, einem Ausgang (S) zur Speisung des Fernscheinwerfers (3), wenn die Abblendlichter (2) angemacht sind und einem anderen Ausgang (M1, M2), der eine Spannung zur Speisung des elektrischen Motors (9) liefert, die bestimmt ist, den Filter (8) in die unwirksame Stellung zu schwenken, wenn keine Spannung an dem Eingang (E) des Umschaltungskreislaufes (10) angelegt ist und der eine umgekehrte Spannung zur Speisung des elektrischen Motors (9) liefert, wenn die Spannung zum Anmachen der Abblendlichter (2) durch das Umschaltungsmittel (4) an den Eingang (E) des Umschaltungskreislaufes (10) angelegt ist, um den Filter in die wirksame Stellung zu schwenken.
